**Europäisches Patentamt**

(19) **European Patent Office**

**Office européen des brevets**

(11) Publication number : **0 341 634 B1**

(12) # EUROPEAN PATENT SPECIFICATION

(45) Date of publication of patent specification :
08.07.92 Bulletin 92/28

(51) Int. Cl.⁵ : **B60G 9/00**

(21) Application number : **89108254.7**

(22) Date of filing : **08.05.89**

(54) **Assembly for the elastic suspension of a motor vehicle axle.**

(30) Priority : **13.05.88 IT 5314988 U**

(43) Date of publication of application :
**15.11.89 Bulletin 89/46**

(45) Publication of the grant of the patent :
**08.07.92 Bulletin 92/28**

(84) Designated Contracting States :
**DE ES FR GB IT NL SE**

(56) References cited :
FR-A- 1 174 803
US-A- 1 995 375
US-A- 2 180 860
US-A- 2 589 043
US-A- 4 343 375

(73) Proprietor : **IVECO FIAT S.p.A.**
**Via Puglia 35**
**I-10156 Torino (IT)**

(72) Inventor : **Messori, Pier Paolo**
**Via Roma, 5/1**
**I-10025 Pino Torinese (IT)**
Inventor : **Casetta, Franco**
**Vicolo Vic, 18**
**I-10090 S.Giusto Canavese (IT)**
Inventor : **Viola, Paolo**
**Via Sismonda, 10/6**
**I-10100 Torino (IT)**

(74) Representative : **Jorio, Paolo et al**
**STUDIO TORTA Società Semplice Via Viotti 9**
**I-10121 Torino (IT)**

EP 0 341 634 B1

## Description

The present invention relates to an elastic suspension assembly between an axle and the underbody of a motor vehicle, particularly a bus.

Known assemblies of the aforementioned type usually comprise a pair of substantially straight longitudinal arms secured centrally and on opposite sides to the axle, and the ends of which are fitted with fastening elements for respective elastic elements, e.g. air-powered springs, and for the bottom end of a respective damper. Said assemblies usually also comprise a pair of bottom longitudinal reaction bars secured at the ends, via articulated joints with elastic bushes, to the inner portion of said arms and to a bracket integral with the underbody.

The longitudinal and transverse loads and rolling torques on the axle are transmitted to the underbody by a system of structural elements comprising, for example, in addition to said reaction bars, a stabilizer bar, a cross bar, and a top reaction bar secured to the underbody and top center portion of the axle, or a stabilizer bar and two triangle bars. An elastic suspension assembly corresponding to the preamble of claim 1 is known from US-A-4 343 375.

Assemblies of the aforementioned type present a number of drawbacks.

As the bottom reaction bars are usually housed inside the respective suspension arms, the center distance is relatively small. Consequently, a load equivalent to a vertical torque on the axle is counterbalanced by a relatively intense torque reaction on the reaction bars, in view of the reduced torque arm. Said torque reaction is transmitted to the elastic bushes connecting the reaction bars to the underbody and suspension arms, which bushes yield and are distorted under load, thus affecting the attitude of the suspension and impairing driving precision. This problem may, of course, be solved by employing more rigid bushes, less subject to distortion, but this would merely improve driveability of the vehicle at the expense of comfort.

The above problem has been partially solved by the present Applicant in Italian utility Patent Application IT-U-53688-B/87 entitled "Assembly for the elastic suspension of a motor vehicle axle" filed on 30 September 1987 but not published. The assembly referred to in said application substantially comprises a pair of sheet metal box-section arms having respective front and rear ends extending upwards and outwards of the center portions. The reaction bars are secured externally to the center portions of the arms, thus increasing the center distance as compared with conventional solutions; the special design of the arms enabling this to be achieved with no reduction in the center distance of the air-powered springs or dampers. The drawback of this solution lies in the difficulty in producing the arms, welding of the sheet metal walls of which is highly critical in terms of both performance (substantially no possibility of automated welding) and structural resistance.

The aim of the present invention is to provide an assembly for the elastic suspension of a motor vehicle axle, designed to overcome the drawbacks typically associated with known assemblies of the aforementioned type.

With this aim in view, according to the present invention, there is provided an elastic suspension assembly between an axle and the underbody of a motor vehicle; said assembly comprising a pair of arms having a substantially horizontal center portion arranged longitudinally in relation to the vehicle and secured centrally to said axle, and respective front and rear portions secured to elastic means and damping means located between said arms and said underbody; and a system of structural elements secured to said axle and said underbody for transmitting to said underbody the longitudinal and transverse loads and rolling torques on said axle; said system comprising a pair of substantially longitudinal reaction bars, each connected at the ends, via articulated means, to said center portion of a respective said arm and to said underbody; said elastic and damping means being located outside a pair of vertical planes containing the respective axes of said reaction bars; The assembly comprising a cross member to which are butt connected said front portions of said arms; said cross member comprising end portions projecting outwards in relation to said arms and secured to said elastic and damping means; characterised in that the distance between said torque bars and the mid longitudinal plane of said vehicle being at least equal to the distance between said plane and said center portions of said arms.

A preferred embodiment of the present invention will be described by way of a non-limiting example with reference to the accompanying drawings, in which :

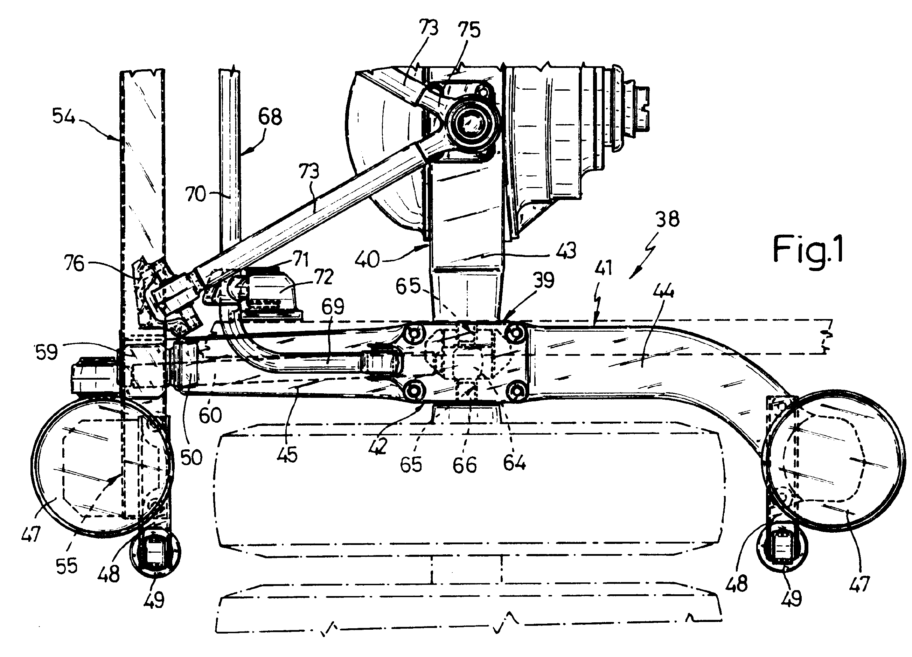

Fig.1 shows a partial top plan view of an assembly for the elastic suspension of a motor vehicle axle in accordance with the teachings of the present invention;

Fig.2 shows a side view of the Fig.1 assembly;

Fig.3 shows a partial front view of a detail in Fig.1.

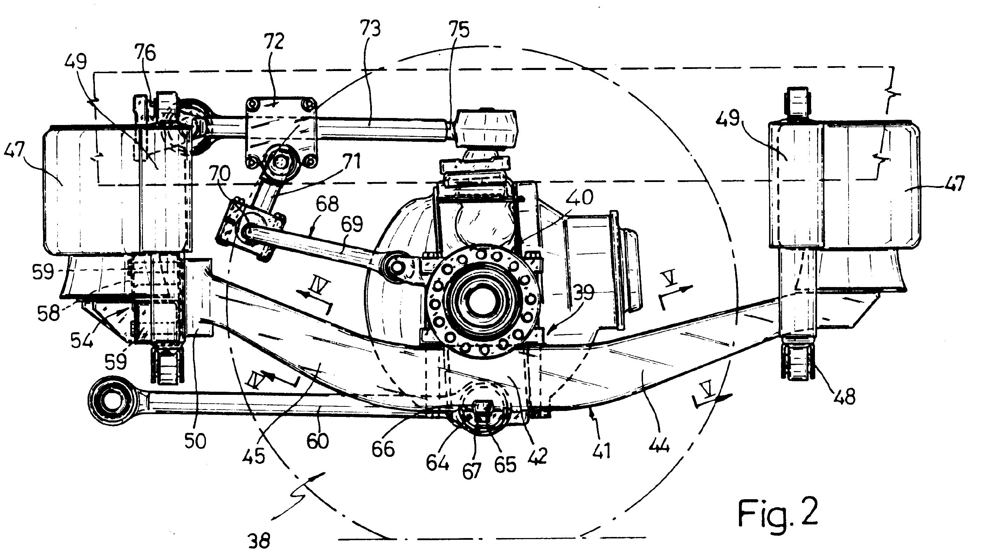

Fig.s 4 and 5 show respective sections along lines IV-IV and V-V in Fig. 2.

Number 38 in Fig.s 1 and 2 indicates an assembly for the elastic suspension of a rear drive axle 40 of a bus.

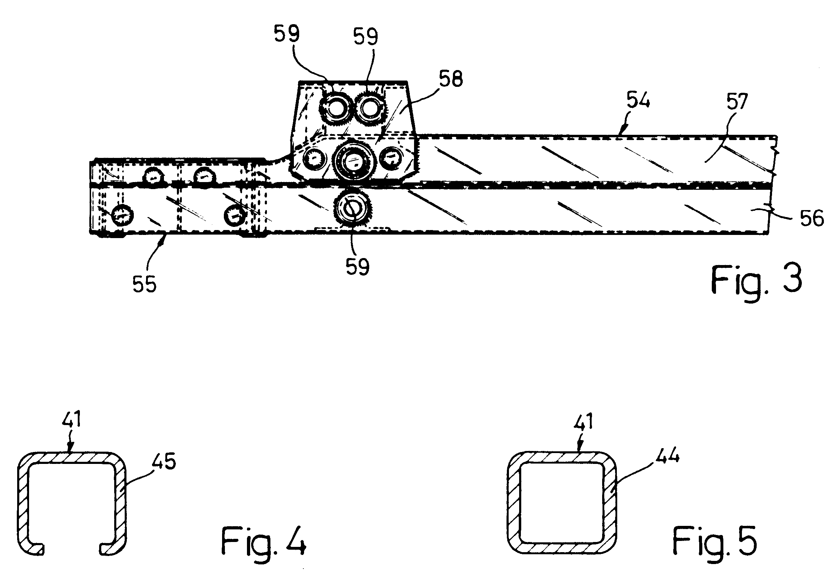

Assembly 38 comprises a pair of arms 41 (only one of which is shown) conveniently cast from spheroidal cast iron. By means of a respective bracket 39, said arms 41 are secured by a central portion 42 to a respective end of rear axle casing 43, and present an enclosed, hollow, quadrilateral section along rear portion 44 (Fig. 5), and a open-bottom, substantially C-shaped section along front portion 45 and the front portion of center portion 42 (Fig.4).

Rear portions 44 of arms 41 extend upwards and outwards in relation to the mid longitudinal plane of the vehicle, and are secured at the ends, in known manner, to respective air-powered springs 47 and respective supports 48 on which pivot the bottom ends of respective dampers 49.

Front portions 45 of arms 41 slope upwards, and terminate with respective substantially flat end flanges 50. Said flanges 50 provide for butt connecting arms 41 to a cross member 54, the end portions 55 of which project laterally outwards of arms 41, and are fitted with respective air-powered springs 47 and supports 48 for securing dampers 49.

Cross member 54 presents a substantially quadrilateral section, and is formed by welding two superimposed shells 56, 57 (Fig.3). Bottom shell 56 presents a constant section over its entire length, whereas top shell 57 is lower at end portions 55 than over the center portion of cross member 54 extending between the arm 41 connecting portions. At said connecting portions, cross member 54 is fitted with two shaped supporting elements 58 having a section substantially in the form of an upside down U. In elements 58 and in bottom shell 56 of cross member 54, close to supporting elements 58, provision is made for a number of through bushes 59 for receiving the bolts securing arms 41 to cross member 54.

Assembly 38 comprises a pair of bottom longitudinal reaction bars 60 connected by a respective rear end to arms 41, via articulated ball joints 64 with elastic bushes (not shown), and by a respective front end to respective supporting means integral with a known underbody (not shown). For this purpose, in center portion 42 of arms 41, there are formed two transverse seats 65 for the respective ends of a center pin 66 of a corresponding articulated ball joint 64 secured inside said seats by means of screws 67. The rear ends of reaction bars 60 are therefore housed inside the cavities of arms 41, thus enabling vertical rebound of the same. Assembly 38 also comprises, in known manner, a substantially U-shaped stabilizing bar 68 forming two end portions 69 arranged longitudinally in relation to the vehicle and pivoting on a respective bracket 39, and a center portion 70 arranged crosswise in relation to the vehicle and to which are hinged the bottom ends of a pair of hangers 71, the top ends of which pivot on respective supports 72 integral with the vehicle underbody.

Assembly 38 also comprises a pair of top reaction bars 73 arranged in the form of a triangle and having respective rear ends secured to a common V-shaped support 75 secured in articulated manner to the center of rear axle casing 43, and respective front ends secured in articulated manner to respective supports 76 integral with the underbody.

Operation of assembly 38 is self-explanatory, and therefore requires no further description.

The advantages of assembly 38 according to the preferred embodiment will be clear from the foregoing description. Firstly, connection of reaction bars 60 inside the cavity of arms 41 provides for increasing the center distance between the same as compared with existing known solutions, thus increasing the torque arm and so reducing torque intensity under given external stress, as well as distortion of the elastic bushes on articulated joints 64. For a given yield of articulated joints 64, this therefore provides for improving driving precision, or, alternatively, for a given driving precision, for employing more flexible articulated joints and so improving passenger comfort.

Moreover, the improved design of reaction bars 60 according to the present invention in no way reduces the center distance of air-powered springs 47 or dampers 49, by virtue of the special design of rear portions 44 of arms 41 and the presence of cross member 54, thus in no way impairing the righting effect of springs 47 or performance of dampers 49.

As compared with the suspension assembly described in said Patent Application IT-U-53688-B/87, manufacture of arms 41, by casting, is both easier and more reliable from the structural standpoint. The presence of cross member 54 provides for obtaining the maximum possible center distance between air-powered springs 47 and dampers 49, without torquing front portions 45 of arms 41, which present an open section (and, therefore, lower torsional resistance) for housing and enabling rebound of torque bars 60. The loads transmitted by springs 47 and dampers 49 exert bending stress on cross member 54, which presents a section having a greater moment of inertia over the center portion where the bending moment is greatest.

To those skilled in the art it will be clear that changes may be made to assembly 38 as described and illustrated herein without, however, departing from the scope of the present invention as defined in the claims. For example, triangle bars 73 may be replaced by a top longitudinal torque bar and a cross bar. Changes may also be made to the section of arms 41 and the manner in which these are secured to springs 47, dampers 49, cross member 54, rear axle casing 43, and reaction bars 60. Moreover, assembly 38 may be applied, not only to a bus, but to any type of motor vehicle.

## Claims

1. An elastic suspension assembly (38) between an axle (40) and the underbody of a motor vehicle; said assembly comprising a pair of arms (41) having a substantially horizontal center portion (42) arranged longitudinally in relation to the vehicle and secured centrally to said axle (40), and respective front and rear portions (45,44) secured to elastic means (47) and damping means (49) located between said arms (41) and said underbody; and a system of structural elements (60,68,73) secured to said axle (40) and said underbody for transmitting to said underbody the longitudinal and transverse loads and rolling torques on said axle (40); said system comprising a pair of substantially longitudinal reaction bars (60), each connected at the ends, via articulated means (64), to said center portion (42) of a respective said arm (41) and to said underbody; said elastic and damping means being located outside a pair of vertical planes containing the respective axes of said reaction bars (60); The assembly comprising a cross member (54) to which are butt connected said front portions (45) of said arms (41); said cross member (54) comprising end portions (55) projecting outwards in relation to said arms (41) and secured to said elastic (47) and damping (49) means; characterised in that the distance between said reaction bars (60) and the mid longitudinal plane of said vehicle is at least equal to the distance between said plane and said center portions (42) of said arms (41).

2. An assembly as claimed in Claim 1, characterised by the fact that respective rear portions (44) of said arms (41) extend upwards and outwards in relation to said center portions (42), and that said front portions extend upwards from said center portions (42) and present respective end flanges (50) for connection to said cross member (54).

3. An assembly as claimed in the foregoing Claims, characterised by the fact that said arms (41) are hollow and cast from spheroidal cast iron.

4. An assembly as claimed in one of the foregoing Claims, characterised by the fact that said rear portions (44) of said arms (41) present an enclosed section, and that said front portions (45) and at least part of said center portions (42) present an open, substantially C-shaped section with a downward-facing cavity.

5. An assembly as claimed in Claim 4, characterised by the fact that said reaction bars (60) are secured to a bottom portion of said center portions (42) of said arms (41), and are housed at least partially inside said cavity on said center (42) and said front (45) portions of said arms (41).

6. An assembly as claimed in one of the foregoing Claims, characterised by the fact that said cross member (54) is formed from at least two superimposed shells (56, 57).

7. An assembly as claimed in Claim 6, characterised by the fact that at least one of said shells (57) presents a larger section over the center portion of said cross member (54).

8. An assembly as claimed in any one of the foregoing Claims, characterised by the fact that said articulated means consist of articulated joints (64) with elastic bushes.

9. An assembly as claimed in any one of the foregoing Claims, characterised by the fact that said system of structural elements comprises two triangle bars (73).

10. An assembly as claimed in any one of the foregoing Claims from 1 to 8, characterised by the fact that said system of structural elements comprises a top longitudinal torque bar and a cross bar.

11. An assembly as claimed in any one of the foregoing Claims, characterised by the fact that said system of structural elements comprises a stabilizing bar (68).

12. An assembly as claimed in any one of the foregoing Claims, characterised by the fact that it is applied to the rear drive axle of a bus.

**Patentansprüche**

1. Elastische Aufhängungs-Anordnung (38) zwischen einer Achse (40) und der Unterseite des Aufbaus eines Kraftfahrzeugs, mit zwei Armen (41) mit im wesentlichen waagerechtem Mittelbereich (42) in Längsrichtung des Fahrzeugs, der mittig an der Achse (40) befestigt ist, und vorderen und hinteren Bereichen (45,44), die an elastischen Einrichtungen (47) und Dämpfungseinrichtungen (49) befestigt sind, die zwischen den Armen (41) und dem unteren Aufbau angeordnet sind; und mit einem System von Konstruktionselementen (60,69,73), die an der Achse (40) und dem unteren Aufbau befestigt sind und die Längs- und Querlasten sowie die Rollmomente, die auf die Achse (40) ausgeübt werden, auf den unteren Fahrzeugaufbau übertragen, welches System zwei im wesentlichen längsgerichtete Reaktionsstangen (60), die an den Enden über Gelenkeinrichtungen (64) mit dem Mittelbereich (42) der Arme (41) und dem Unterteil des Aufbaus verbunden sind, welche elastischen und Dämpfungseinrichtungen außerhalb von zwei senkrechten Ebenen liegen, die die Achsen der Reaktionsstangen (60) enthalten, welche Anordnung ein Querglied (54) umfaßt, mit dem die vorderen Endbereiche (45) der Arme (41) stumpf verbunden sind, welches Querglied (54) Endbereiche (55) aufweist, die nach außen in bezug auf die Arme (41) weisen und an den elastischen (4) und Dämpfungseinnchtungen (49) befestigt sind, dadurch gekennzeichneit, daß der Abstand zwischen den Reaktionsstangen (60) und der Längsmittelebene des Fahrzeugs wenigstens gleich dem Abstand zwischen dieser Ebene und den Mittelbereichen (42) der Arme (41) ist.

2. Anordnung nach Anspruch 1, dadurch gekennzeichnet, daß die hinteren Bereiche (44) der Arme (41) nach oben und außen im Verhältnis zu den Mittelbereichen (42) verlaufen und daß die vorderen Bereiche sich von den Mittelbereichen (42) aus nach oben erstrecken und Endflansche (50) zur Verbindung mit dem Querglied (54) aufweisen.

3. Anordnung nach den vorhergehenden Ansprüchen, dadurch gekennzeichnet, daß die Arme (41) hohl sind und aus Sphäro-Gußeisen bestehen.

4. Anordnung nach einem der vorhergehenden Ansprüche, dadurch gekennzeichnet, daß die rückwärtigen Bereiche (44) der Arme (41) einen geschlossenen Bereich bilden und daß die vorderen Bereiche (45) und wenigstens ein Teil der mittleren Bereiche (42) einen offenen, im wesentlichen C-förmigen Querschnitt mit nach unten gerichtetem Hohlraum aufweisen.

5. Anordnung nach Anspruch 4, dadurch gekennzeichnet, daß die Reaktionsstangen (60) am Bodenbereich der mittleren Bereiche (42) der Arme (41) befestigt und wenigstens teilweise innerhalb des Hohlraums der mittleren (42) und vorderen (45) Bereiche der Arme untergebracht sind.

6. Anordnung nach einem der vorhergehenden Ansprüche, dadurch gekennzeichnet, daß das Querglied (54) aus wenigstens zwei übereinanderliegenden Schalen (56, 57) besteht.

7. Anordnung nach Anspruch 6, dadurch gekennzeichnet, daß wenigstens eine der Schalen (57) im Mittelbereich des Quergliedes (54) einen größeren Querschnitt aufweist.

8. Anordnung nach einem der vorhergehenden Ansprüche, dadurch gekennzeichnet, daß die Gelenkeinrichtung aus Gelenkverbindungen (64) mit elastischen Buchsen besteht.

9. Anordnung nach einem vorhergenden Ansprüche, dadurch gekennzeichnet, daß das System der Konstruktionselemente zwei Dreieckstangen (73) umfaßt.

10. Anordnung nach einem der Ansprüche 1 bis 8, dadurch gekennzeichnet, daß das System der Konstruktionselemente eine obere, längsgerichtete Drehmomentstange und eine Querstange umfaßt.

11. Anordnung nach einem der vorhergehenden Ansprüche, dadurch gekennzeichnet, daß das System der Konstruktionselemente eine Stabllisatorstange (68) umfaßt.

12. Anordnung nach einem der vorhergehenden Ansprüche, dadurch gekennzeichnet, daß die Anordnung angewendet ist auf die hintere Antriebsachse eines Busses.

**Revendications**

1. Un ensemble élastique de suspension (38) entre un essieu (40) et le dessous de caisse d'un véhicule à moteur; ledit ensemble comprenant une paire de bras (41) comprenant une partie centrale, sensiblement horizontale (42) disposée longitudinalement par rapport au véhicule et fixée au centre sur ledit essieu (40), et des parties respectives avant et arrière (45, 44) fixées à des moyens élastiques (47) et à des moyens amortisseurs (49) situés entre lesdits bras (41) et ledit dessous de caisse; et un système d'éléments structuraux (60, 68, 73) fixé sur ledit axe (40) et ledit dessous de caisse pour transmettre audit dessous de caisse les charges longitudinales et transversales et les couples de roulis appliqués sur ledit essieu (40); ledit système comprenant une paire de barres de réaction sensiblement longitudinales (60) reliées chacune à leurs extrémités, par des moyens articulés (64), à ladite partie centrale (42) de l'un desdits bras respectifs (41) et audit dessous de caisse; lesdits moyens élastiques et amortisseurs étant situés à l'extérieur d'une paire de plans verticaux contenant les axes respectifs desdites barres de réaction (60); l'ensemble comprenant un élément transversal (54) auquel sont reliées en bout lesdites parties avant (45) desdits bras (41); ledit élément transversal (54) comprenant des parties d'extrémité (55) en saillie vers l'extérieur par rapport auxdits bras (41) et fixées auxdits moyens élastiques (47) et amortisseurs (49); caractérisé en ce que la distance entre lesdites barres de réaction (60) et ledit plan médian longitudinal dudit véhicule est au moins égale à la distance entre ledit plan et lesdites parties centrales (42) desdits bras (41).

2. Un ensemble selon la revendication 1, caractérisé par le fait que des parties arrière respectives (44) desdits bras (41) s'étendent vers le haut et l'extérieur par rapport auxdites parties centrales (42), et en ce que lesdites parties avant s'étendent vers le haut à partir desdites parties centrales (42) et présentent des rebords d'extrémité respective (50) en vue d'une liaison avec ledit élément transversal (54).

3. Un ensemble selon les revendications précédentes, caractérisé par le fait que lesdits bras (41) sont creux et coulés en fonte sphéroïdale.

4. Un ensemble selon l'une des revendications précédentes, caractérisé par le fait que lesdites parties arrière (44) dudit bras (41) présentent une section fermée, et en ce que lesdites parties avant (45) et au moins une fraction desdites parties centrales (42) présentent une section ouverte, sensiblement en forme de C, comportant une cavité tournée vers le bas.

5. Un ensemble selon la revendication 4, caractérisé par le fait que lesdites barres de réaction (60) sont fixées à une partie inférieure desdites parties centrales (42) desdits bras (41) et sont logées au moins partiellement à l'intérieur de ladite cavité desdites parties centrales (42) et desdites parties avant (45) desdits bras (41).

6. Un ensemble selon l'une des revendications précédentes, caractérisé par le fait que ledit élément transversal (54) est formé d'au moins deux enveloppes superposées (56, 57).

7. Un ensemble selon la revendication 6, caractérisé par le fait qu'au moins l'une desdites enveloppes (57) présente une section plus grande au-dessus de la partie centrale dudit élément transversal (54).

8. Un ensemble selon l'une quelconque des revendications précédentes, caractérisé par le fait que lesdits moyens articulés consistent en des joints articulés (64) à manchons élastiques.

9. Un ensemble selon l'une quelconque des revendications précédentes, caractérisé par le fait que ledit système d'éléments structuraux comprend deux barres (73) formant un triangle.

10. Un ensemble selon l'une quelconque des revendications précédentes 1 à 8, caractérisé par le fait que ledit système d'éléments structuraux comprend une barre longitudinale supérieure de couple et une barre transversale.

11. Un ensemble selon l'une quelconque des revendications précédentes, caractérisé par le fait que ledit système d'éléments structuraux comprend une barre stabilisatrice (68).

12. un ensemble selon l'une quelconque des revendications précédentes, caractérisé par le fait qu'il est appliqué à l'essieu moteur arrière d'un autobus.

Fig.1

Fig. 2

Fig. 3

Fig. 4

Fig. 5

EP 0 341 634 B1